# EUROPÄISCHE PATENTSCHRIFT

(11) **EP 3 939 825 B1**
(45) Veröffentlichungstag und Bekanntmachung des Hinweises auf die Patenterteilung: **18.06.2025**
(21) Anmeldenummer: 21185995.4
(22) Anmeldetag: 16.07.2021
(51) Int. Cl.: B60L 53/63, B60L 53/67

(54) **VERFAHREN ZUM LADEN EINES ELEKTROFAHRZEUGS**
METHOD FOR CHARGING AN ELECTRIC VEHICLE
PROCÉDÉ DE CHARGE D'UN VÉHICULE ÉLECTRIQUE

(30) Priorität: 17.07.2020 DE 102020118978
(43) Veröffentlichungstag der Anmeldung: 19.01.2022
(73) Patentinhaber: LADE GmbH, 55129 Mainz (DE)
(72) Erfinder: SCHULMEYER, Dennis, 55129 Mainz (DE)
(74) Vertreter: Richardt Patentanwälte PartG mbB

(56) Entgegenhaltungen:
- EP-A2- 0 949 733
- DE-A1- 102013 204 256
- DE-A1- 102017 209 128
- KR-B1- 101 142 728
- US-A1- 2011 095 723
- US-A1- 2013 026 986
- US-A1- 2015 008 888
- US-A1- 2016 137 087
- US-A1- 2016 236 584
- US-A1- 2018 215 276
- US-A1- 2020 023 747

## Beschreibung

Die Erfindung betrifft ein Verfahren zum Laden eines Elektrofahrzeugs, ein System zum Laden eines Elektrofahrzeugs, einen Ladepunkt sowie ein Computerprogrammprodukt.

Die Elektromobilität erfordert eine flächendeckende Versorgung mit Ladepunkten, an welchen Elektrofahrzeuge elektrisch aufgeladen werden können. Elektrofahrzeuge können PKWs, LKWs, Fahrräder, Elektroroller und vieles mehr sein. Um eine entsprechende Infrastruktur aufzubauen können hierfür spezielle Ladestationen zum Einsatz kommen, welche direkt ans öffentliche Stromnetz angeschlossen sind. Insbesondere für den privaten Einsatz und den Einsatz zum Beispiel in Einkaufszentren und Parkhäusern erscheint dies jedoch unpraktisch, da hierfür die Betreiber zusätzlich zu den bereits bestehenden "Hausanschlüssen" noch einen weiteren Anschluss an das öffentliche Stromnetz benötigen.

Als Hausanschluss wird dabei die Verbindungsstelle zwischen den Elektrizitätsleitungen des Energieversorgungsunternehmens und den Leitungen der Verbraucher des Gebäudes verstanden. "Haus" bzw. Verbraucher bzw. Gebäude ist im Rahmen der vorliegenden Beschreibung allgemein zu verstehen und beschränkt sich nicht auf private Immobilien wie Einfamilienhäuser, sondern umfasst die bereits beispielhaft erwähnten Parkhäuser, Einkaufszentren, Mehrfamilienhäuser und öffentliche Einrichtungen.

Beispielsweise offenbart die US2011133693 A1 eine Ladestation für Fahrzeuge mit Lastmanagement.

Aus der KR 101 142 728 B1 ist es bekannt, dass lokal an einer Ladevorrichtung ein Überstrom detektiert wird und der Ladevorgang in diesem Fall beendet wird.

Auch die US 2011/095723 A1 ist mit der Problematik eines Überstromschutzes befasst und offenbart, dass eine Ladestation die Stromstärke überwacht und bei Erfassen eines Überstroms die Zufuhr von elektrischer Energie zu einem Elektrofahrzeug unterbindet.

Die EP 0 949 733 A2 betrifft eine elektrische Schutzschaltvorrichtung, die über einen Datenbus kommunikationsfähig ist.

Die US 2016 / 236 584 A1 offenbart ein System zum Erzeugen einer lokalen autonomen Reaktion auf einen Zustand eines elektrischen Netzes durch Ladestationen für Elektrofahrzeuge, umfassend: einen ersten Elektrizitätszähler zum Ablesen von Strom, Frequenz oder Spannung von einer ersten Elektrizitätsversorgungsleitung zu einer Elektrofahrzeug-Ladestation; einen zweiten Elektrizitätszähler zum Ablesen von elektrischem Strom, Frequenz oder Spannung von dem elektrischen Netz, das die Vielzahl von Elektrofahrzeug-Ladestationen versorgt; einen dritten Elektrizitätszähler zum Ablesen von Strom, Frequenz oder Spannung von einer dritten Elektrizitätsleitung von einem oder mehreren erneuerbaren Generatoren; und eine Elektrofahrzeug-Ladesteuerung, die betriebsmäßig mit dem ersten Elektrizitätszähler, dem zweiten Elektrizitätszähler, dem dritten Elektrizitätszähler und den Elektrofahrzeug-Ladestationen gekoppelt ist und betriebsfähig ist, um Ablesungen von dem ersten Elektrizitätszähler, dem zweiten Elektrizitätszähler und dem dritten Elektrizitätszähler zu erhalten und die Elektrofahrzeug-Ladestationen auf der Grundlage der erhaltenen Ablesungen zu steuern.

Die US 2020 / 023 747 A1 offenbart eine Vorrichtung zum Laden einer Batterie eines Elektrofahrzeugs, ausgebildet zum Bestimmen eines Energieladeplans zum Laden des Elektrofahrzeugs aus einem Mikronetz, basierend auf Ladepräferenzinformationen für das Elektrofahrzeug und auch auf Energieverbrauchsinformationen für Geräte auf dem Mikronetz und alternativen Energieressourceninformationen, die die Verfügbarkeit von elektrischer Energie zur Versorgung des Mikronetzes aus einer alternativen Energieressource auf dem Mikronetz anzeigen, die über ein Kommunikationsnetzwerk empfangen werden. Ein Ladeanweisungssignal zum Laden des Elektrofahrzeugs aus dem Mikronetz gemäß dem Stromladeplan kann über das Kommunikationsnetz übertragen werden.

Die US 2013 / 026 986 A1 offenbart ein Verfahren, das den Empfang einer Vielzahl von Ladeanforderungen für Elektrofahrzeuge, den Empfang einer Vielzahl von Leistungsanforderungen für zusätzliche elektrische Lasten und die Steuerung des Ladens der Elektrofahrzeuge in Verbindung mit der Vielzahl von Ladeleistungsanforderungen für Elektrofahrzeuge umfasst. Verschiedene Beispiele umfassen die Modulation des Ladevorgangs eines oder mehrerer elektrischer Fahrzeuge, um die von den elektrischen Fahrzeugen und einer Vielzahl zusätzlicher elektrischer Lasten verbrauchte Gesamtleistung unter einem Schwellenwert für den Stromverbrauch zu halten.

Die US 2016 / 137 087 A1 offenbart ein Stromversorgungssystem einschließlich einer Elektrofahrzeug-Versorgungseinrichtung (EVSE). Die EVSE enthält ein Kommunikations-Gateway, das einem Benutzer über einen EVSE-Server den Zugang zum Internet ermöglicht. In einigen Ausführungsformen ermöglicht die EVSE die Kommunikation mit anderen intelligenten Geräten und / oder die Kommunikation eines Status von Lasten, die an ein Lastzentrum angeschlossen sind. Der Benutzer oder der Versorgungsdienstleister kann über den EVSE-Server Energiemanagement- und Hausautomatisierungsaufgaben unter Verwendung des Kommunikations-Gateways der EVSE durchführen und über die EVSE Steuersignale an intelligente Geräte senden. Die EVSE kann auch einen Schutzmechanismus für intelligente Geräte bieten, die mit dem Lastzentrum verbunden sind, falls es zu Notfällen wie Stromausfällen oder Überspannungen im Stromnetz kommt.

Der Erfindung liegt die Aufgabe zugrunde, ein verbessertes Verfahren zum Laden eines Elektrofahrzeugs, ein entsprechendes System, einen Ladepunkt und ein Computerprogrammprodukt zu schaffen. Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zum Laden eines Elektrofahrzeugs an einem Ladepunkt eines Satzes von Ladepunkten über einen mit Versorgungsnetzspannung versorgten Elektro-Gebäudeanschluss angegeben. Der Elektro-Gebäudeanschluss ist mit dem (öffentlichen) Versorgungsnetz zum Beispiel eines Energieversorger elektrisch verbunden. Die Ladepunkte sind mit dem Elektro-Gebäudeanschluss über ein Stromkabel und mit einem Freigabeserver über ein Netzwerkkabel verbunden, wobei eine Strommesseinrichtung permanent den aktuell am Gebäudeanschluss fließenden Strom bestimmt und Informationen hierüber mittels serieller Datenübertragung als Bussignal über das Netzwerkkabel an die Ladepunkte sendet, wobei das Verfahren durch den Ladepunkt des Satzes von Ladepunkten umfasst: Empfang einer Ladefreigabe des Elektrofahrzeuges von dem Freigabeserver über das Netzwerkkabel unter Verwendung eines Internetprotokolls; als Reaktion auf den Empfang der Ladefreigabe, Durchführung eines Ladevorgangs des Elektrofahrzeugs, wobei der Ladevorgang eine Bereitstellung des vom Gebäudeanschluss über das Stromkabel transportierten Stroms an das Elektrofahrzeug als Ladestrom umfasst; zumindest während dem Ladevorgang, Prüfung ob das Bussignal eine Strom-Überlast am Gebäudeanschluss signalisiert, und im Falle der Signalisierung der Strom-Überlast, Stoppen des Ladevorgangs.

Das Netzwerkkabel dient somit gleichzeitig zur Übertragung von Daten unter Verwendung des Internetprotokolls wie beispielsweise FTP, HTTP oder HTTPs über TCP/IP, und zur Übertragung des seriellen Bussignals. Während das Internetprotokoll eine direkte Kommunikation mit zum Beispiel dem Internet ermöglicht, also eine insbesondere sehr einfache und komfortable Anbindung der Ladepunkte an das Internet ermöglicht, könnte die serielle Datenübertragung einer sehr schnellen und kaum störanfälligen Übertragung der Informationen bezüglich des aktuell am Gebäudeanschluss fließenden Stroms dienen.

Das beschriebene Verfahren könnte den Vorteil haben, dass mit minimalem Verdrahtungsaufwand die Ladepunkte mit dem Gebäudeanschluss sicher verbunden werden können. "Sicher" meint in diesem Fall, dass aufgrund der Schnelligkeit der Datenübertragungen, welche einem seriellen Bussystem innewohnt, das Risiko minimiert werden kann, dass am Gebäudeanschluss ein Überlastfall eintritt. Bei Wohngebäudeanschlüssen ist beispielsweise der Anschluss nur so dimensioniert, dass zum Schutz bei Überlast über Stromschutzeinrichtungen ein maximaler Bemessungsstrom von mindestens 63 A zum Einsatz kommen kann. Dies ist nur beispielhaft und in der Praxis von Region zu Region und Gebäudetyp unterschiedlich. Sind Verbraucher im Gebäude gleichzeitig bei einem Ladevorgang von Fahrzeugen aktiv, könnte dies recht schnell zu einer Überlastsituation führen.

Denkbar ist beispielsweise der Fall, dass gerade ein Ladevorgang von einem oder mehrerer Fahrzeuge an dem Ladepunkt beziehungsweise den verschiedenen Ladepunkten stattfindet und nun spontan ein großer Energieverbraucher im Haus oder mehrere große Energieverbraucher im Haus in Betrieb genommen wird oder werden. Die Strommesseinrichtung soll in diesem Fall in der Lage sein, den Anstieg des Stromverbrauchs im Millisekundenbereich zu detektieren, etwa in einem Zeitraum von zwischen 0,5 ms und 10 ms, und über die serielle Buskommunikation die Ladepunkte zu einem Stoppen der Ladevorgänge zu bringen. Die Geschwindigkeit der seriellen Buskommunikation sollte dabei so hoch sein, dass die Ladelastabnahme so schnell angepasst wird, bevor eine (etwa relativ träge) Sicherung des Gebäudeanschlusses wie z.B. eine Schmelzsicherung des Gebäudeanschlusses auslöst. Die Sicherung kann auch als ein Schütz ausgebildet sein oder ein solches umfassen.

Vorzugsweise erfolgen die Bestimmung des aktuellen Stromverbrauchs und die serielle Datenübertragung in Echtzeit. Bevorzugt sind hierbei Buszykluszeiten von weniger als 20 ms, besonders bevorzugt weniger als 10 ms oder gar 5 ms. Die Strecke zu den Einheiten, die den Ladevorgang stoppen können, soll nicht mehr als 50 m lang sein, vorzugsweise nicht mehr als 30 m lang sein, weiter vorzugsweise nicht mehr als 15 m.

Wenn etwa die Sicherung/ der Schütz des Gebäudeanschlusses nach einer vorbestimmten Zeitspanne (von beispielsweise 300 ms) einer Überlast auslösen würde, soll dann dieses Auslösen verhindert werden, indem das Erfassen des Stromverbrauchs, das Erfassen der Veränderung (des Anstiegs) des Stromverbrauchs, die Übermittlung der diesbezüglichen Information an den Ladepunkt und der Vorgang des Stoppen des Ladens am Ladepunkt insgesamt nicht mehr Zeit benötigen, als die vorbestimmte Zeitspanne währt. Der Ladepunkt verfügt vorzugsweise über eine geeignete Schnittstelle für den seriellen (Echtzeit-) Datenbus.

Alternativ kann ferner das Unterbrechen des Ladens auch außerhalb der Ladepunkte, an einer Stromzufuhrstelle zu einem oder mehreren Ladepunkten erfolgen, die vorzugsweise elektrisch näher an der Sicherung/dem Schütz liegt als der Ladepunkt selbst. So kann noch schneller reagiert werden. Diese Stromzufuhrstelle als alternative Einheit zum Stoppen des Ladevorgangs sollte dann mit dem seriellen (Echtzeit-) Datenbus gekoppelt sein und eine entsprechende Schnittstelle aufweisen.

Der Vorgang des Erfassens des Stromverbrauchs und seiner Veränderung einerseits und der des Stoppens andererseits kann/können jeweils in allen beschriebenen Fällen durch einen Mikroprozessor, Mikrocontroller, oder Dgl. umsetzbar bzw. auslösbar sein, wobei der Mikroprozessor oder Mikrocontroller mit entsprechend schneller Taktung (z.B. zwischen 200 Hz und 2 MHz oder 2 MHz und mehr) arbeitet.

Da das besagte Netzwerkkabel nebst der seriellen Datenübertragung auch der Kommunikation unter Verwendung des Internetprotokolls dient, ist es möglich, mit eben besagtem minimalem Verdrahtungsaufwand die Ladepunkte mit weiteren Informationen zu steuern und zu versorgen. Dies umfasst insbesondere der Empfang der obig erwähnten Ladefreigabe des Elektrofahrzeugs.

Zur seriellen Datenübertragung kann beispielsweise ein differenzielles Signal (z.B. +-24V), welches über 2 Leitungen des Netzwerkkabels übertragen wird, zum Einsatz kommen. Hierbei sollte die Anstiegsrate (Slewrate) begrenzt werden. Es stehen damit z.B. mindestens 300 Baud zur Datenübertragung zur Verfügung. Eine symmetrische Signalübertragung könnte hierbei den Vorteil haben, eine besonders hohe Toleranz gegenüber Störungen zu gewährleisten, was bei einer klassischen Datenübertragung unter Verwendung von TCP/IP und Internetprotokollen nicht gewährleistet werden kann. Es ist denkbar, dass die beiden für die differentielle Signalübertragung verwendeten Adern des Netzwerkkabels auch gleichzeitig zur Übertragung der Daten mit dem Internetprotokoll genutzt werden.

In einer weiteren Variante könnte zur Erhöhung der Sicherheit der Ladepunkt dazu konfiguriert sein, ein Ladevorgang auch dann zu stoppen, wenn er kein Bussignal mehr empfängt. Letzteres könnte aus einem Defekt der Strommesseinrichtung oder einem Defekt des Netzwerkkabels resultieren. In jedem Fall wird sichergestellt, dass ein Ladevorgang nur dann stattfindet, wenn mit Sicherheit eine Aussage bezüglich des am Gebäudeanschluss fließenden Stroms getroffen werden kann und der Strom einen vorbestimmten Maximalwert nicht überschreitet.

Nach einer Ausführungsform umfasst das Verfahren ferner eine Bereitstellung einer Regelvorrichtung, wobei die Regelvorrichtung ebenfalls das Bussignal empfängt, wobei die Regelvorrichtung über das Internetprotokoll oder mittels serieller Datenübertragung über das Netzwerkkabel dem Ladepunkt insbesondere individuell eine maximal zu verwendende Ladeleistung zuweist. Die maximal zu verwendende Ladeleistung könnte sich z.B. daran orientieren, dass dem Gebäude immer ein vorbestimmter Puffer für einen zusätzlichen Stromverbrauch durch gebäudeinterne Verbraucher reserviert bleibt.

Diese serielle Datenübertragung kann unter Verwendung derselben Bustopologie und z.B. demselben Busprotokoll stattfinden, wie sie durch die Strommesseinrichtung zur Kommunikation der Informationen bezüglich des am Gebäudeanschluss fließenden Stroms verwendet wird.

Grundsätzlich kann die Regelvorrichtung ein eigenständiges Modul sein, welches im Gesamtsystem unabhängig von den Ladepunkten einmalig oder mehrmalig vorgesehen werden kann. Bevorzugt ist die Regelvorrichtung jedoch in einem der Ladepunkte oder gar in mehreren oder allen Ladepunkten integriert. Die Regelvorrichtung bestimmt die maximal zu verwendende Ladeleistung in Abhängigkeit von dem aktuellen Stromverbrauch des Gebäudeanschlusses anhand des Bussignals.

Dies könnte den Vorteil haben, dass ein Ladevorgang des Elektrofahrzeugs flexibel möglich ist, ohne das Risiko eines Überlastfalls am Gebäudeanschluss zu erhöhen. Die Regelvorrichtung kennt den aktuell am Gebäudeanschluss fließenden Strom und weiß außerdem vorzugsweise, wie hoch dieser Strom maximal sein darf. Die Regelvorrichtung kann über das Netzwerkkabel und das Internetprotokoll die einzelnen Ladepunkte insbesondere individuell anweisen, einen bestimmten maximalen Ladestrom zu verwenden, sodass garantiert ist, dass trotz der Ladevorgänge der Gebäudeanschluss nicht überlastet wird.

Außerdem weiß die Regelvorrichtung optional, welcher der Ladepunkte im Moment einen Ladevorgang eines Elektrofahrzeugs durchführen möchten. Es ist daher z.B. auch möglich, dass die Regelvorrichtung die maximal zu verwendende Ladeleistung ferner in Abhängigkeit von den aktuell stattfindenden Ladevorgängen und/oder sogar von Ladeprofilen der aufzuladenden Fahrzeuge bestimmt. Hat ein Ladeprofil eines Fahrzeugs eine Form, bei welcher zum Ende eines Ladevorgangs der von der Batterie des Fahrzeugs aufnehmbare Ladestrom über einen längeren Zeitraum stetig abnimmt, könnte die Regelvorrichtung mit dieser Kenntnis des Ladeprofils über den besagten Zeitraum hinweg einem anderen Fahrzeug eine stetig ansteigende maximale Ladeleistung zuweisen. All dies erfolgt jedoch in den Schranken der permanenten Überprüfung durch die Ladepunkte, ob das Bussignal eine Stromüberlast am Gebäudeanschluss signalisiert, sodass im Falle der Signalisierung der Stromüberlast jeglicher Ladevorgang unmittelbar und sofort gestoppt werden kann.

Nach einer Ausführungsform kann jeder der Ladepunkte als die Regelvorrichtung dienen, wobei der als Regelvorrichtung dienende Ladepunkt ein Master-Ladepunkt und die übrigen Ladepunkte Slave-Ladepunkte sind. Die Bestimmung, welcher der Ladepunkte der Master-Ladepunkt ist kann durch einen zufälliges aushandeln dieser Eigenschaft unter den Ladepunkten selbstständig erfolgen. Dies könnte den Vorteil haben, dass der Implementierungsaufwand minimiert wird, so dass sich ein entsprechender Errichter des Systems keine Gedanken machen muss, welcher der Ladepunkte nun als Master oder Slave dient.

Es ist jedoch auch möglich, dass die Bestimmung des Master-Ladepunkts nach einem vordefinierten Schema automatisch erfolgt. Da die Eigenschaft des Master-Ladepunkt ja die Bestimmung der maximal zu verwendenden Ladeleistung und damit einen gewissen Datenverarbeitungsaufwand (Rechenlast) mit sich bringt, resultiert dies zwangsläufig in einem höheren Verschleiß des Master-Ladepunkt im Vergleich zu den Slave-Ladepunkten. Ein vordefiniertes Schema wie beispielsweise ein Wechseln der Mastereigenschaft in vordefinierten Zeiträumen, zum Beispiel wöchentlich, verteilt den besagten Verschleiß gleichmäßig über alle Ladepunkte. Damit könnte insgesamt das Ausfallrisiko eines einzelnen Ladepunkts aufgrund hoher Beanspruchung durch Datenverarbeitung minimiert werden.

Nach einer Ausführungsform ist der Elektro-Gebäudeanschluss ein Dreiphasen-Anschluss mit drei Außenleitern, wobei das Stromkabel ebenfalls die drei Außenleiter aufweist und über die drei Außenleiter des Stromkabels die Versorgungs-Netzspannung des Versorgungsnetzes den Ladepunkten zur Verfügung gestellt wird, wobei die Strommesseinrichtung den Strom spezifisch für jeden der Außenleiter des Elektro-Gebäudeanschlusses bestimmt und die Information die jeweilige Stromstärke der Außenleiter oder Verhältnisse der Stromstärken der jeweiligen Außenleiter zueinander umfasst. Im Falle dessen es sich bei dem Ladevorgang um einen Einphasen-Ladevorgang handelt kann die Regelvorrichtung über das Internetprotokoll dem Ladepunkt die für den Ladevorgang zu verwendenden Außenleiter des Stromkabels in Abhängigkeit von der spezifisch für jeden der Außenleiter des Elektro-Gebäudeanschlusses bestimmten Stromstärke oder den Verhältnissen der Stromstärken zuweisen.

Dies könnte dann Vorteil haben, dass das Risiko einer zu großen Schieflast, also einer ungleichmäßigen Belastung der Außenleiter des Dreiphasen-Wechselstromnetzes, minimiert wird. Da je nach Fahrzeugtyp nur ein einphasiger Ladevorgang zum Einsatz kommt, könnte ohne entsprechende Schieflastkompensation die Verwendung hoher Stromstärken zu großen Schieflasten führen. Die beschriebene Variante der Schieflastkompensation unter Verwendung der Kombination von Strommessung durch die Strommesseinrichtung und Bestimmung der zu verwendenden Außenleiter durch die Regelvorrichtung könnte in sehr einfacher, kostengünstiger aber effektiver Weise eine Schieflastkompensation ermöglichen, da eine Strommessung durch die Strommesseinrichtung ohnehin für alle drei Phasen (d.h. Außenleiter) stattfindet und die Regelvorrichtung als zentrale Instanz für alle Ladepunkte Kenntnis bezüglich der aktuell stattfindenden Ladevorgänge hat.

Nach einer Ausführungsform erfolgt das Zuweisen der zu verwenden Außenleiter so, dass ein möglichst gleicher Stromfluss für alle Außenleiter des Elektro-Gebäudeanschlusses resultiert (z.B. Differenz max. 20%).

Nach einer Ausführungsform weist zumindest ein Teil der Ladepunkte eine Luftschnittstelle zur Drahtloskommunikation mit einem mobilen Endgerät auf. Über eine der Luftschnittstellen wird eine Ladeanforderung für das Elektrofahrzeug empfangen. Daraufhin wird unter Verwendung des Internetprotokolls diese Ladeanforderung an den Freigabeserver gesendet, wobei die Ladefreigabe als Antwort hierauf vom Freigabeserver empfangen wird.

Dies könnte dann Vorteil haben, dass zuverlässig sichergestellt wird, dass der Wunsch eines Ladevorgangs durch das zu ladende Elektrofahrzeug oder durch den Benutzer desselben kommuniziert werden kann. Ein Beispiel hierfür wäre, dass sich der Ladepunkt in einer Tiefgarage befindet, welche von Haus aus weder über Mobilfunkempfang noch über WLAN-Empfang verfügt. In diesem Fall könnte es sich bei der Luftschnittstelle um eine so genannte Femtozelle, also eine Funkzelle mit minimaler räumlicher Ausdehnung zum Beispiel nach dem UMTS oder LTE oder GSM Standard handeln. Oder es könnte sich bei der Luftschnittstelle um einen WLAN Access Point handeln.

Zum Beispiel könnte der Benutzer über eine entsprechende Anwendung, zum Beispiel eine Anwendung auf seinem Mobiltelefon zuverlässig dem Ladepunkt denn der Wunsch des Ladevorgangs seines Elektrofahrzeugs mitteilen. Die Luftschnittstelle würde diese Ladeanforderung für das Elektrofahrzeug empfangen und über das Netzwerkkabel unter Verwendung des Internetprotokolls an einen Freigabeserver senden. Dieser kann zum Beispiel im Internet in einer Cloud oder aber lokal im Bereich des den Elektro-Gebäudeanschluss aufweisenden Gebäudes oder gar der Ladepunkte implementiert sein. Der Freigabeserver könnte nach Empfang der Ladeanforderung prüfen, ob der Benutzer oder das Elektrofahrzeug für einen Ladevorgang berechtigt ist. Eine Berechtigung könnte beispielsweise davon abhängig gemacht werden, ob der Benutzer hierfür Geld entrichtet hat.

In Abhängigkeit von der Entscheidung des Freigabeservers wird entweder eine Ladefreigabe oder keine Ladefreigabe vom Freigabeserver empfangen. Je nach Antwort des Freigabeserver wird daraufhin ein entsprechender Ladevorgang stattfinden oder auch nicht.

Es angemerkt, dass allgemein unter einer Luftschnittstelle zur Drahtloskommunikation eine beliebige Schnittstelle verstanden wird, über welche eine Kommunikation des Elektrofahrzeugs oder eines mobilen Endgeräts bezüglich eines stattfindenden Ladevorgangs des Elektrofahrzeugs insbesondere mit dem Freigabeserver stattfinden kann. Die Luftschnittstelle kann beispielsweise Übertragungsverfahren über RFID, Mobilfunk, WLAN, Bluetooth usw. ermöglichen.

Nach einer Ausführungsform bestimmt ferner die Strommesseinrichtung eine Stromflussrichtung des aktuell am Gebäudeanschluss fließenden Stroms, wobei die Strommesseinrichtung ferner Informationen über die Stromflussrichtung als das Bussignal über das Netzwerkkabel sendet, wobei die Ladeleistung des Ladepunkts in Abhängigkeit von der mittels des Bussignals gesendeten Stromflussrichtung geregelt wird.

Verfügt das Gebäude zum Beispiel über Möglichkeiten, selbst Strom zu erzeugen (z.B. Windkraft, Solarenergie), könnte dieser selbst erzeugte Strom entweder zur Eigennutzung inklusive dem Aufladen der Elektrofahrzeuge verwendet werden, oder aber teilweise oder gar vollständig über den Elektro-Gebäudeanschluss in das öffentliche Stromnetz eingespeist werden. Durch die Berücksichtigung der Stromflussrichtung könnte insbesondere sichergestellt werden, dass möglichst der selbst erzeugte Strom primär einem Eigenverbrauch zugeführt wird. In anderen Worten ist bevorzugt, dass die Stromflussrichtung vom öffentlichen Stromnetz immer zum Gebäude hin gegeben ist. Aus wirtschaftlicher Sicht ist die Selbstnutzung von selbst erzeugtem Strom wesentlich lukrativer als die Rückspeisung in das öffentliche Stromnetz.

Da bei selbst erzeugtem Strom beispielsweise über Solarenergie oder Windkraft die Erzeugungsleistung typischerweise stark schwankend ist (kurzzeitige Schwankungen des Windes oder der Wolkenbedeckung), kann durch die Berücksichtigung der Stromrichtung vorzugsweise in Echtzeit dafür gesorgt werden, dass beim Ladevorgang von Elektrofahrzeugen selbst erzeugter Strom möglichst vollständig "genutzt" wird. Am Beispiel der Windenergie würde bei einer Windböe und der damit einhergehenden Steigerung der Leistung selbst erzeugten Stroms sofort die Ladeleistung an einem oder mehrerer der Ladepunkte erhöht werden. Sobald der Wind wieder etwas nachlässt, also die Leistung selbst erzeugten Stroms reduziert wird, würde auch dementsprechend die Ladeleistung reduziert werden.

Nach einer Ausführungsform wird in Abhängigkeit von der mittels des Bussignals gesendeten Stromflussrichtung entweder durch den Ladepunkt die eigene Ladeleistung z.B. unabhängig von den anderen Ladepunkten geregelt, oder bevorzugt durch die Regelvorrichtung die maximal zu wendende Ladeleistung für die Ladepunkte bestimmt. Zum Beispiel kann jeder Ladepunkt oder die Regelvorrichtung in Abhängigkeit von dem Bussignal die Ladeleistung zum Beispiel so lange prozentual anpassen, bis die Stromflussrichtung einen Stromfluss in Richtung Gebäudeanschluss signalisiert.

Nach einer Ausführungsform weist der Ladepunkt eine Steuerelektronik zur Durchführung des Ladevorgangs auf, wobei die Energieversorgung der Steuerelektronik über das Netzwerkkabel erfolgt. Es ist auch möglich, dass die Energieversorgung der Regelvorrichtung über das Netzwerkkabel erfolgt. Diese als Power over Ethernet (PoE) bezeichnete Variante könnte den Vorteil haben, dass ein separates Stromversorgungskabel für den Betrieb der Ladepunkte entfällt. Dem einzelnen Netzwerkkabel kommt also eine mehrfache Funktion zu, nämlich die Kommunikation mittels des Internetprotokolls, die serielle Buskommunikation und die Stromversorgung der Steuerelektronik der Ladepunkte. Die Kommunikation mittels des Internetprotokolls ermöglicht zum Beispiel eine Kommunikation der Ladepunkte untereinander, eine Kommunikation mit Servern im Internet und/oder eine Kommunikation mit der Regelvorrichtung.

Die Spannungsversorgung der Steuerelektronik über PoE könnte den Vorteil haben, dass ein Betrieb der Ladepunkte auch ohne eine Bestromung des Stromkabels möglich ist. Dies ist aus Sicherheitsgründen hilfreich, findet der Betrieb der Steuerelektronik in diesem Fall mit z.B. max. 12 V oder 24 V statt, wohingegen am Stromkabel bis zu 230 V Spannung anliegen.

Nach einer Ausführungsform handelt es sich bei dem Netzwerkkabel um ein Twisted-Pair Kabel, vorzugsweise mindestens in der Kategorie Cat5, bevorzugt Cat6 oder Cat7. Eine mögliche Pin-Belegung eines Cat5 Twisted-Pair Kabels wäre: Pin 1 Tx+, Pin 2 Tx-, Pin 3 Rx+, Pin 4 DC+, Pin 5 Diff+, Pin 6 Rx-, Pin 7 DC-, Pin 8 Diff-. Hierbei bedeuten DC = Gleichspannung für PoE, Tx = Sender von Daten, Rx = Empfänger von Daten und Diff bezeichnet das differentielle Signal für die serielle Datenübertragung.

Ferner beschrieben ist ein Verfahren zum Laden eines Elektrofahrzeugs an einem Ladepunkt eines Satzes von Ladepunkten über einen mit Versorgungsnetzspannung versorgten Elektro-Gebäudeanschluss, wobei der Ladepunkt mit dem Elektro-Gebäudeanschluss über ein Stromkabel und mit einer Strommesseinrichtung und einem Freigabeserver über ein Netzwerkkabel verbunden ist, wobei das Verfahren durch den Ladepunkt des Satzes von Ladepunkten umfasst: Empfang einer Ladefreigabe des Elektrofahrzeuges vom Freigabeserver über das Netzwerkkabel unter Verwendung eines Internetprotokolls; als Reaktion auf den Empfang der Ladefreigabe, Durchführung eines Ladevorgangs des Elektrofahrzeugs, wobei der Ladevorgang eine Bereitstellung des vom Gebäudeanschluss über das Stromkabel transportierten Stroms an das Elektrofahrzeug als Ladestrom umfasst; zumindest während dem Ladevorgang, Prüfung ob ein von der Strommesseinrichtung mittels serieller Datenübertragung über das Netzwerkkabel empfangenes Bussignal eine Strom-Überlast am Gebäudeanschluss signalisiert, und im Falle der Signalisierung der Strom-Überlast, Stoppen des Ladevorgangs.

Ferner beschrieben ist ein System zum Laden eines Elektrofahrzeugs an einem Ladepunkt eines Satzes von Ladepunkten über einen mit Versorgungsnetzspannung versorgten Elektro-Gebäudeanschluss, wobei das System die Ladepunkte und eine Strommesseinrichtung umfasst, wobei die Ladepunkte mit dem Elektro-Gebäudeanschluss über ein Stromkabel und mit einem Freigabeserver über ein Netzwerkkabel verbindbar sind, wobei die Strommesseinrichtung dazu ausgebildet ist, permanent den aktuell am Gebäudeanschluss fließenden Strom zu bestimmen und Informationen hierüber mittels serieller Datenübertragung als Bussignal über das Netzwerkkabel an die Ladepunkte zu senden, wobei der Ladepunkt des Satzes von Ladepunkten ausgebildet ist zum: Empfang einer Ladefreigabe des Elektrofahrzeuges über das Netzwerkkabel von dem Freigabeserver unter Verwendung eines Internetprotokolls; als Reaktion auf den Empfang der Ladefreigabe, Durchführung eines Ladevorgangs des Elektrofahrzeugs, wobei der Ladevorgang eine Bereitstellung des vom Gebäudeanschluss über das Stromkabel transportierten Stroms an das Elektrofahrzeug als Ladestrom umfasst; zumindest während dem Ladevorgang, Prüfung ob das Bussignal eine Strom-Überlast am Gebäudeanschluss signalisiert, und im Falle der Signalisierung der Strom-Überlast, Stoppen des Ladevorgangs.

Ferner beschrieben ist ein Ladepunkt zum Laden eines Elektrofahrzeugs über einen mit Versorgungsnetzspannung versorgten Elektro-Gebäudeanschluss, wobei der Ladepunkt mit einem Elektro-Gebäudeanschluss und weiteren Ladepunkten über ein Stromkabel und mit einer Strommesseinrichtung und einem Freigabeserver über ein Netzwerkkabel verbindbar ist, wobei der Ladepunkt ausgebildet ist zum: Empfang einer Ladefreigabe des Elektrofahrzeuges vom Freigabeserver über das Netzwerkkabel unter Verwendung eines Internetprotokolls; als Reaktion auf den Empfang der Ladefreigabe, Durchführung eines Ladevorgangs des Elektrofahrzeugs, wobei der Ladevorgang eine Bereitstellung des vom Gebäudeanschluss über das Stromkabel transportierten Stroms an das Elektrofahrzeug als Ladestrom umfasst; zumindest während dem Ladevorgang, Prüfung ob ein von der Strommesseinrichtung mittels serieller Datenübertragung über das Netzwerkkabel empfangenes Bussignal eine Strom-Überlast am Gebäudeanschluss signalisiert, und im Falle der Signalisierung der Strom-Überlast, Stoppen des Ladevorgangs.

Ferner beschrieben ist ein Computerprogrammprodukt mit von mehreren verteilten Prozessoren ausführbaren Instruktionen, wobei die Ausführung der Instruktionen die Prozessoren zur Durchführung des obig beschriebenen Verfahrens veranlasst. Die Prozessoren können z.B. in der Strommesseinrichtung, in der Regeleinrichtung und/oder den Ladepunkten enthalten sein.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Im Folgenden werden Ausführungsform der Erfindung andere Zeichnungen näher erläutert. Es zeigen:
Fig. 1 ein System zum Laden eines Elektrofahrzeugs mit Ladepunkten und Elektro-Gebäudeanschluss,
Fig. 2 eine Strommesseinrichtung,
Fig. 3 einen Ladepunkt,
Fig. 4 weitere Details eines Systems zum Laden eines Elektrofahrzeugs,
Fig. 5 ein Flussdiagramm eines Verfahrens zum Laden eines Elektrofahrzeugs.

Im Folgenden werden einander ähnliche Elemente den gleichen Bezugszeichen gekennzeichnet.

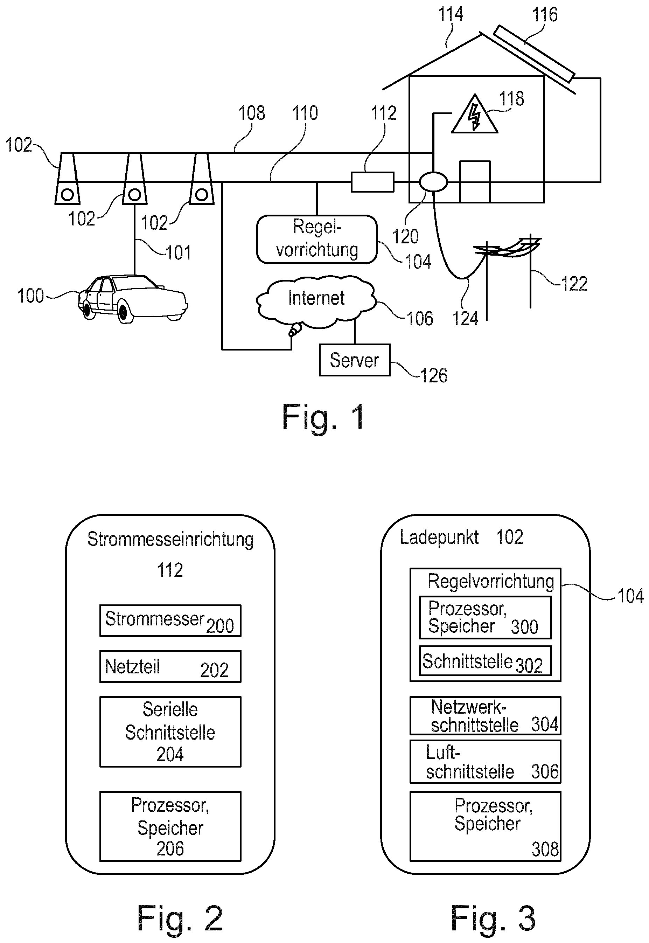

Figur 1 zeigt ein System zum Laden eines Elektrofahrzeugs 100 an einem Ladepunkt eines Satzes von mehreren Ladepunkten. Das Laden soll über einen mit Versorgungsnetzspannung eines öffentlichen Stromnetzes 122 versorgten Elektro-Gebäudeanschluss 120 erfolgen. Der Anschluss 120 befindet sich in einem Gebäude 114. Ohne Beschränkung der Allgemeinheit sei im Folgenden davon ausgegangen, dass es sich bei dem Gebäude 114 um ein privates Wohnhaus handelt. Der Elektro-Gebäudeanschluss 120 ist über ein Stromkabel 124 mit dem öffentlichen Stromnetz 120 verbunden. Eine Stromleitung 108 verbindet den Elektro-Gebäudeanschluss 120 mit allen Ladepunkten 102.

Nebst den Ladepunkten 102 versorgt der Elektro-Gebäudeanschluss 120 auch Stromverbraucher 118 des Hauses, zum Beispiel eine Kochstelle, eine Waschmaschine, einen Wäschetrockner, Lampen usw.

Figur 1 zeigt ferner eine Strommesseinrichtung 112, welche permanent den aktuell am Gebäudeanschluss 120 fließenden Strom bestimmt und Informationen hierüber mittels serieller Datenübertragung als Bussignal über ein Netzwerkkabel 110 an die Ladepunkte sendet. Über das Netzwerkkabel 110 sind die Ladepunkte 102 in der Lage, mit einem Freigabeserver 126 unter Verwendung eines Internetprotokolls zu kommunizieren. Im Beispiel der Figur 1 befindet sich der Freigabeserver 126 in einer Cloud, ist also über das Internet 106 erreichbar. Es ist aber auch möglich, dass der Freigabeserver in einen der Ladepunkte integriert ist.

Dem Netzwerkkabel 110 kommt damit eine Doppelfunktion zu. Einerseits werden hierüber die Busdaten in vorzugsweise Echtzeit von der Strommesseinrichtung 112 an die Ladepunkte 102 kommuniziert und andererseits dient das Netzwerkkabel 110 zur Kommunikation der Ladepunkte 102 insbesondere mit dem Freigabeserver 126 und optional mit dem Internet 106.

Im Folgenden sei beispielhaft angenommen, dass ein Fahrer des Elektrofahrzeugs 100 den Wunsch hat, sein Fahrzeug an dem mittleren der in Figur 1 gezeigten drei Ladepunkte mit Strom zu betanken. Zu diesem Zweck verbindet der Fahrer des Fahrzeugs 100 sein Fahrzeug zum Beispiel mittels eines Ladekabels 101 mit dem entsprechenden Ladepunkt 102. Er könnte nun eine Ladeanforderung an den Freigabeserver 126 richten. Zum Beispiel verfügt er hierzu über eine entsprechende Anwendung auf seinem Smartphone. Das Smartphone könnte über eine bereits vorhandenes mobiles Telekommunikationsnetzwerk die Anfrage an den Freigabeserver 126 richten. Optional ist es möglich, dass einer oder mehrerer der Ladepunkte 102 eine Luftschnittstelle aufweisen, welche über das Netzwerkkabel 110 mit dem Internet 106 verbunden ist. So könnte es möglich sein, dass die Anwendung des Smartphones unter Verwendung der Luftschnittstelle mit dem Freigabeserver 126 kommuniziert.

Nach Empfang der Ladeanforderung wird der Freigabeserver 126 prüfen, ob der Benutzer des Fahrzeugs 100 dazu berechtigt ist, einen Ladevorgang durchzuführen. Eine solche Prüfung könnte beispielsweise einen entsprechenden Bezahlvorgang umfassen. Wenn der Freigabeserver 126 feststellt, dass der Benutzer zum Aufladen seines Fahrzeugs am Ladepunkt 102 berechtigt ist, sendet der Freigabeserver 126 eine entsprechende Ladefreigabe über das Netzwerkkabel 110 unter Verwendung eines Internetprotokolls an den Ladepunkt 102. Als Reaktion auf den Empfang der Ladefreigabe wird daraufhin der Ladepunkt den Ladevorgang des Fahrzeugs 100 durchführen. Hierzu wird Strom vom Gebäudeanschluss 120 über das Stromkabel 108 zum Ladepunkt 102 und von dort zum Fahrzeug 100 fließen. Dies führt zum Aufladen einer Batterie des Fahrzeugs 100.

Währenddessen bestimmt die Strommesseinrichtung 112 permanent der aktuell am Gebäudeanschluss 120 fließenden Strom. Informationen hierüber werden mittels der seriellen Datenübertragung als Bussignal über das Netzwerkkabel 110 an den Ladepunkt 102 gesendet.

Sollte nun das Bussignal eine Stromüberlast am Gebäudeanschluss signalisieren, wird der Ladepunkt 102 selbstständig den Ladevorgang stoppen. Ein Szenario, bei welchem ein solcher Fall eintreten könnte wäre beispielsweise die Inbetriebnahme leistungsunfähiger elektrischer Verbraucher 118 im Haus 114, währenddessen der Ladevorgang des Fahrzeugs 100 stattfindet. In diesem Fall würde der gesamte durch die Leitung 124 fließende Strom die maximale für den Gebäudeanschluss vorgegebene Belastungsgrenze überschreiten. Bevor jedoch die typischerweise recht träge Hauptsicherung, insbesondere Schmelzsicherung des Hausanschlusses hierauf reagieren und durchschmelzen kann, signalisiert die Strommesseinrichtung 112 in Echtzeit dem Ladepunkt 102 die Stromüberlast. Der Ladepunkt wird daher die Stromzufuhr des Ladevorgangs sofort stoppen, sodass ein "Auslösen" der Hauptsicherung verhindert wird.

Das Signalisieren der Überlast kann durch ein spezielles Bussignal erfolgen. In diesem Fall bestimmt die Strommesseinrichtung 112 selbst, ob ein Überlastfall vorliegt oder nicht und sendet im Überlastfall das spezielle Bussignal. Alternativ werden den Ladepunkten diskrete Strommesswerte der Strommesseinrichtung 112 durch das Bussignal mitgeteilt. Im letzteren Fall müssten die Ladepunkte einen Grenzwert des maximal zulässigen durch die Strommesseinrichtung 112 detektieren Stromflusses kennen, bei dessen Überschreitung die Abschaltung zu erfolgen hat.

Ferner zeigt Figur 1 eine optionale Regelvorrichtung 104. Diese ist in Figur 1 als separates Modul dargestellt und mit dem Netzwerkkabel 110 verbunden. Es ist jedoch auch möglich, dass die Regelvorrichtung 104 in einem oder mehreren der Ladepunkte 102 jeweils integriert ist.

Die Regelvorrichtung 104 empfängt ebenfalls das Bussignal und ist in der Lage, über das Internetprotokoll oder mittels serieller Datenübertragung über das Netzwerkkabel 110 jedem der Ladepunkte 102 insbesondere individuell eine z.B. maximal zu verwendende Ladeleistung zuzuweisen. Das Zuweisen erfolgt dabei in Abhängigkeit von dem aktuellen Stromverbrauch des Gebäudeanschlusses 120, welchen die Regelvorrichtung 104 anhand des Bussignals bestimmt.

Die Regelvorrichtung 104 kennt vorzugsweise die aktuellen und zukünftig anstehenden Ladevorgänge an allen Ladepunkten 102. Ferner kennt zum Beispiel die Regelvorrichtung 104 die Ladeprofile der entsprechenden Fahrzeuge 100, welche an den Ladepunkten 102 zu laden sind. Als übergeordnete Instanz kann die Regelvorrichtung 104 den maximal am Gebäudeanschluss 120 zur Verfügung stehenden Strom den einzelnen Ladepunkten 102 als Ladestrom aufgeteilt zuweisen. Insbesondere im Falle dessen die zu verwendende Ladeleistung ebenfalls über das Bussignal den Ladepunkten 102 zugewiesen wird könnte die Regelvorrichtung in Echtzeit auf etwaige Schwankungen des für Ladevorgänge am Gebäudeanschluss 120 zur Verfügung stehenden Stroms reagieren.

In Figur 1 ist ferner die optionale Variante gezeigt, bei welcher das Haus 114 über ein Solarpanel 116 verfügt. Das Solarpanel 116 kann Sonnenenergie in elektrischen Strom umwandeln und über den Gebäudeanschluss 120 den elektrischen Verbrauchern 118 und den Ladepunkten 102 zur Verfügung stellen. Ferner kann die so durch das Gebäude erzeugte Energie zurück ins öffentliche Stromnetz 122 eingespeist werden.

Z.B. ist die Strommesseinrichtung 112 in der Lage, die Richtung des am Gebäudeanschluss 120 fließenden Stroms zu bestimmen. So kann detektiert werden, ob der durch das Solarpanel 116 zusätzlich erzeugte Strom zurück ins die Stromnetz 122 eingespeist wird oder ob der Strom zum Eigenbedarf genutzt wird. Die Information über die Stromflussrichtung kann über das Bussignal ebenfalls der Regelvorrichtung 104 und/oder den Ladepunkten 102 zur Verfügung gestellt werden.

Die Ladeleistung der Ladepunkte 102 kann in Abhängigkeit von der mittels des Bussignals empfangenen Stromflussrichtung geregelt werden. Zum Beispiel könnte tagsüber bei bewölktem Himmel ein Großteil des zum Aufladen des Fahrzeugs 100 benötigten Stroms aus dem öffentlichen Stromnetz 122 bezogen werden. Im Falle einer Wolkenlücke würde jedoch die Leistung des durch das Solarpanel 116 erzeugten Stroms schlagartig ansteigen, was bei gleichbleibender Ladeleistung des Fahrzeuges 100 zu einer Einspeisung des "zu viel" erzeugten Stroms in das öffentliche Stromnetz 122 führen würde. Da ein Eigenverbrauch des Stroms wirtschaftlicher ist als die Einspeisung ins öffentliche Stromnetz sorgt nun zum Beispiel die Regelvorrichtung 104 dafür, dass als Reaktion auf die Umkehr der Stromflusses weg vom Haus zum öffentlichen Stromnetz die Ladeleistung des Ladepunkts 102 zum Aufladen des Fahrzeugs 100 erhöht wird. Hierzu kommuniziert die Regelvorrichtung 104 über das Netzwerkkabel 110 mit den entsprechenden Ladepunkt und veranlasst diesen zur Erhöhung der Ladeleistung, also des Ladestroms.

Vorzugsweise wird die Ladeleistung innerhalb der durch das Fahrzeug 100 vorgegebenen Obergrenzen bezüglich des Ladestroms so weit erhöht, bis die Strommesseinrichtung 112 über das Bussignal wieder einen Stromfluss vom öffentlichen Stromnetz 122 zum Gebäude 114 signalisiert.

Figur 2 zeigt eine Detailansicht der Strommesseinrichtung 112. Die Strommesseinrichtung verfügt über ein "Strommesser" 200, wobei dieser z.B. mittels eines Shunts oder induktiv den vom öffentlichen Stromnetz 122 zum Gebäudeanschluss 120 fließenden elektrischen Strom misst. Das Messen erfolgt dabei vorzugsweise separat für jeden Außenleiter der Kabelverbindung 124.

In der in Figur 2 gezeigten Variante verfügt die Strommesseinrichtung 112 ferner über ein optionales Netzteil 202, welches der Energieversorgung der Steuerelektronik der Ladepunkte 102 und optional weiterer Komponenten wie zum Beispiel der Regelvorrichtung 104 unter Verwendung von PoE-Technologie dient. Die serielle Schnittstelle 204 dient der Übertragung eines differenzierten Signals, welches die Information über den aktuell am Gebäudeanschluss fließenden Strom als Bussignal den Ladepunkten 102 und optional auch der Regelvorrichtung 104 zur Verfügung stellt.

Ferner verfügt die Strommesseinrichtung über einen Prozessor und Speicher 206. Der Speicher enthält Instruktionen, welche bei Ausführung durch den Prozessor die Strommesseinrichtung zum Messen des Stroms und zur Übermittlung der Informationen hierüber über die serielle Schnittstelle 204 veranlassen.

Figur 3 zeigt ein Beispiel eines Ladepunkts 102. Der Ladepunkt 102 weist eine Netzwerkschnittstelle 304 auf, über welche der Ladepunkt über das Netzwerkkabel 110 unter Verwendung eines Internetprotokolls, zum Beispiel mit dem Internet 106 und dem Server 126, kommunizieren kann. Ferner dient die Netzwerkschnittstelle 304 dazu, das Bussignal von der Strommesseinrichtung 112 über das Netzwerkkabel 110 zu empfangen.

Eine optionale Luftschnittstelle 306 dient der Bereitstellung eines Kommunikationszugangs zum Freigabeserver 126. Beispielsweise ermöglicht die Luftschnittstelle 306 einem Benutzer des Fahrzeuges 100 (Fig. 1), sein Smartphone mit dem Internet 106 und damit mit dem Server 126 zu verbinden. Die Luftschnittstelle 306 kann beispielsweise eine WLAN Schnittstelle sein. Befindet sich zum Beispiel der Ladepunkt 102 an einer Stelle, wo ein öffentlicher Mobilfunkempfang normalerweise nicht gegeben ist (z.B. in einer Tiefgarage), so könnte über die Luftschnittstelle 306 dennoch eine Freigabeanforderung an den Freigabeserver 126 gesendet werden. Die Luftschnittstelle 306 ist über die Netzwerkschnittstelle 304 und damit über das Netzwerkkabel 110 in der Lage, eine Kommunikation mit dem Freigabeserver und 26 und optional auch mit dem Internet 106 zu ermöglichen.

Der Ladepunkt 102 verfügt ferner über einen Prozessor und einen Speicher 308. Der Speicher 308 enthält durch den Prozessor ausführbaren Instruktionen, wobei die Ausführung der Instruktionen durch den Prozessor den Ladepunkt 102 dazu veranlassen, zum Beispiel den Ladevorgang des Fahrzeugs 100 und andere im Rahmen dieser Beschreibung offenbarten Aktionen zu veranlassen.

In der Variante der Figur 3 weist der Ladepunkt 102 ferner die Regelvorrichtung 104 auf. Die Regelvorrichtung 104 weist neben Prozessor und Speicher 300, welche analog zu Prozessor und Speicher 108 bzw. 206 funktionieren, auch eine Schnittstelle 302 auf. Die Schnittstelle 302 kann beispielsweise mit der Netzwerkschnittstelle 304 im Ladepunkt 102 intern verbunden sein. Sie dient einem Empfang des Bussignals von der Strommesseinrichtung 112 und einer Kommunikation der durch den bzw. die Ladepunkte 102 zu verwendenden Ladeleistung in Abhängigkeit von dem aktuellen Stromverbrauch des Gebäudeanschlusses.

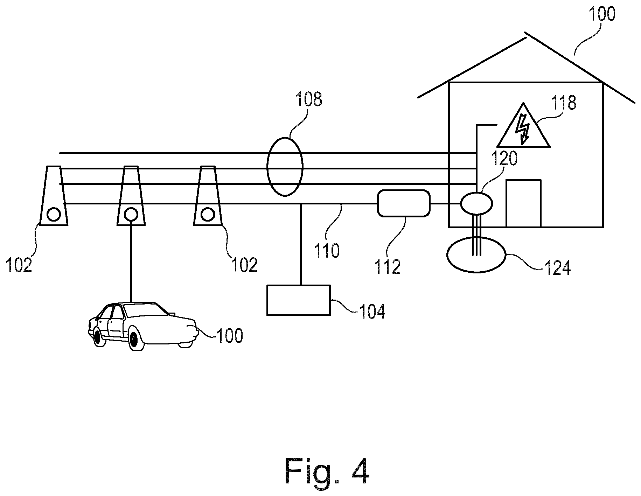

Figur 4 zeigt eine Variante des Systems der Figur 1, wobei hier der Übersichtlichkeit halber diverse Komponenten weggelassen wurden. Hervorgehoben ist in der Figur 4, dass es sich bei dem Gebäudeanschluss 120 um einen Anschluss handelt, bei welchem die vom öffentlichen Stromnetz kommende "Stromleitung" drei Außenleiter aufweist. Es handelt sich hierbei also um ein Dreiphasen-Anschluss. Der Begriff der Phase und des Außenleiters wird im Rahmen der vorliegenden Offenbarung synonym verwendet.

Die drei Außenleiter des Gebäudeanschlusses 120 werden den Ladepunkten 102 als Stromkabel 108 mit drei Außenleitern zur Verfügung gestellt. Die Strommesseinrichtung 112 ist beispielhaft ausgebildet, den Strom spezifisch für jeden der Außenleiter des Gebäudeanschlusses zu bestimmen und eine Information hierüber als Bussignal über das Netzwerkkabel 110 den Ladepunkten 102 (und optional der Regelvorrichtung 104) zu übermitteln. Bezüglich der Art und Weise, wie die Informationen bezüglich des Stroms der Außenleiter übermittelt wird gibt es mehrere Möglichkeiten. Eine beispielhafte Variante liegt in der Übermittlung absoluter Werte der Ströme für jeden der Außenleiter. Eine andere Variante könnte sein, dass Verhältnisse der Stromstärken der jeweiligen Außenleiter zueinander übermittelt werden.

Auf Basis der Informationen bezüglich der jeweiligen Stromstärken der Außenleiter kann nun die Regelvorrichtung 104 den Ladepunkten 102 den für den jeweiligen Ladevorgang zu verwendenden Außenleiter des Stromkabels 108 zuweisen. Dies gilt natürlich nur, wenn der entsprechende Ladevorgang am Ladepunkt nicht gleichzeitig alle drei Phasen, d. h. alle drei Außenleiter des Stromkabels 108 benötigt. Ein Beispiel hierfür wäre ein Ladevorgang eines Fahrzeugs 100 mit lediglich einer einzelnen Phase. Diese einzelne Phase könnte in Abhängigkeit davon ausgewählt werden, welche Phase der Kabelzuführung 124 am Gebäudeanschluss 120 aktuell die niedrigste Strombelastung aufweist. Das Ziel ist, dass die Regelvorrichtung möglichst dafür sorgt, dass eine möglichst gleicher Stromfluss für alle Außenleiter des Gebäudeanschlusses resultiert. "Möglichst gleich" meint in diesem Zusammenhang zum Beispiel ein unterschied in den Stromflüssen von maximal 30 %, vorzugsweise maximal 20 % zwischen zwei Außenleitern.

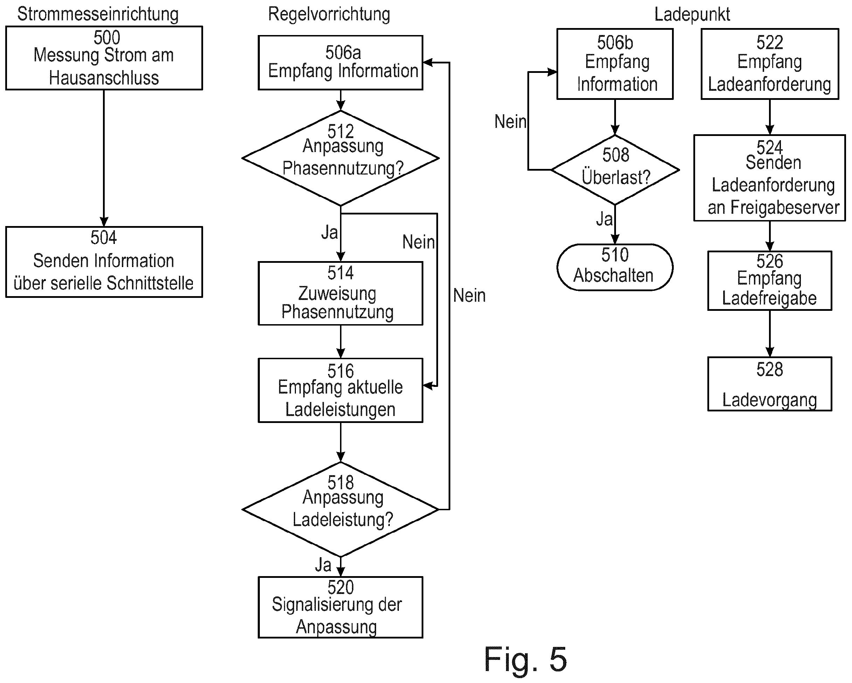

Die Figur 5 zeigt verschiedene Flussdiagramme eines Verfahrens zum Laden eines Elektrofahrzeugs. Die Flussdiagramme sind dabei aufgeteilt bezüglich der Module, welche die in den Flussdiagrammen gezeigten Verfahren beiliegt durchführen. Schritte 500-504 beschreiben Schritte der Strommesseinrichtung, Schritte 506-520 beschreiben Schritte der Regelvorrichtung und Schritte 522-528 beschreiben Schritte des Ladepunkts.

Zunächst sei auf das Verfahren auf Seiten der Strommesseinrichtung eingegangen. Wie obig diskutiert, misst die Messeinrichtung entweder Außenleiterspezifisch oder insgesamt den am Gebäudeanschluss fließenden Strom. Dies entspricht Schritt 500. In Schritt 504 wird eine Information über das Messergebnis über die serielle Schnittstelle der Strommesseinrichtung als Bussignal übermittelt. Es seien dieser Stelle angemerkt, dass die Schritte 505 und 504 permanent durch die Strommesseinrichtung durchgeführt werden, d. h. parallel zu etwaigen Verfahrensschritten, welche durch die Regelvorrichtung bzw. den Ladepunkt durchgeführt werden.

Im Folgenden werden die Schritte diskutiert, welche durch den Ladepunkt durchgeführt werden. In Schritt 506b wird über das Netzwerkkabel das serielle Bussignal empfangen. Dieses Signal enthält die im Schritt 504 gesendeten Informationen. In Schritt 508 überprüft der Ladepunkt, ob das Bussignal eine Stromüberlast am Gebäudeanschluss signalisiert. Ist dies nicht der Fall, setzt sich das Verfahren wiederholt mit Schritt 506b fort. Im Falle der Detektion der Überlast endet das Verfahren in Schritt 510 mit dem Abschalten des Ladepunkts.

Ähnlich wie die Schritte 500-504 bei der Strommesseinrichtung, werden auch am Ladepunkt die Schritte 506b-510 permanent zyklisch durchgeführt, zumindest wenn aktuell ein Ladevorgang durch den Ladepunkt durchgeführt wird.

Ebenfalls am Ladepunkt werden die Schritte 522-528 durchgeführt. Die Schritte 522-524 sind hierbei optional und betreffen insbesondere den Fall, dass eine Ladeanforderung direkt am Ladepunkt empfangen werden kann. Dies ist der Fall, wenn der Ladepunkt über eine entsprechende Luftschnittstelle verfügt. Nach dem Empfang der Ladeanforderung in Schritt 522 wird diese über das Netzwerkkabel an den Freigabeserver gesendet. Zwingend notwendig ist in Schritt 526 der Empfang einer Ladefreigabe, welcher dafür sorgt, dass daraufhin in Schritt 528 der eigentliche Ladevorgang startet.

Die Schritte 506a-520 beschreiben Vorgänge der Regelvorrichtung. Die Regelvorrichtung kann hierbei in den Ladepunkt integriert sein oder separat hiervon installiert sein. Seitens der Regelvorrichtung wird in Schritt 506a die über die serielle Schnittstelle gesendete Information über das Netzwerkkabel empfangen. Schritt 506a entspricht insofern Schritt 506b.

Die Schritte 512-514 und die Schritte 516-518 sind optional zueinander und unabhängig voneinander implementierbar. In Schritt 512 wird davon ausgegangen, dass am Gebäudeanschluss die Strommesseinrichtung den am Gebäudeanschluss fließenden Strom spezifisch für alle drei Außenleiter bestimmt. Die in Schritt 506a empfangene Information enthält insofern Daten bezüglich des Stromflusses jeden Außenleiters. Schritt 512 prüft nun, ob eine Schieflast zwischen den Außenleitern vorliegt. Ist dies der Fall, wird in Schritt 514 einem oder mehreren der Ladepunkte, welche aktuell ein Ladevorgang durchführen eine zum Laden zu verwendende Phase (einer der Außenleiter) zugewiesen, so dass insgesamt die Schieflast minimiert wird. Nach Schritt 514 folgt Schritt 516, zu welchem das Verfahren unmittelbar springt, wenn aus Schritt 512 keine Notwendigkeit der Phasenanpassung resultiert.

In Schritt 516 empfängt die Regelvorrichtung die Ladeleistungen, mit welchen aktuell die Ladepunkte Fahrzeuge mit Strom betanken. Anhand über Schritt 506a signalisierten Stromverbrauchs des Gebäudeanschlusses wird im nachfolgenden Schritt 518 geprüft, ob eine Anpassung der Ladeleistung für einen oder mehrere der Ladepunkte zu erfolgen hat. Eine Anpassung der Ladeleistung könnte beispielsweise einem der Ladepunkte signalisiert werden, wenn das Ladeprofil eines Ladevorgangs eines anderen Ladepunkts signalisiert, dass zum Beispiel über einen bestimmten Zeitraum mit einer kontinuierlichen Abnahme des Ladestroms zu rechnen ist. Dies ist bei bestimmten Batterietypen beispielsweise am Ende eines Ladevorgangs der Fall. In diesem Fall könnte einem anderen Ladepunkt die nun freiwerdende Ladeleistung dynamisch zugewiesen werden. Dies erfolgt in Schritt 520 mit der Signalisierung der Anpassung der Ladeleistung.

Ein anderes Szenario für Schritt 518 ist, dass zum Beispiel das Bussignal einen aktuellen Stromfluss am Gebäudeanschluss signalisiert, welcher nicht überschritten werden sollte "maximaler Gesamtstrom". Steht in diesem Fall an einem weiteren Ladepunkt ein weiterer Ladevorgang an, kann die Regelvorrichtung über Schritt 518 festlegen, dass der zur Verfügung stehende maximale Gesamtstrom auf die Ladevorgängen aktuell beteiligten Ladepunkte verteilt wird. Auch dies erfolgt in Schritt 520 mit der Signalisierung der Anpassung der entsprechenden Ladeleistungen. All dies kann auch kombiniert werden mit Berücksichtigung der Ladeprofile der aufzuladenden Fahrzeuge, wie zum Beispiel obig beschrieben.

Die obig beschriebenen Varianten können noch mit weiteren Elementen kombiniert werden, um den Betrieb insbesondere der Ladepunkte weiter zu verbessern. Möglich ist z.B. die Integration einer Zähleinrichtung in die Ladepunkte, die auch als Fehlerstromschutzschalter und Überstromschutzeinrichtung fungieren kann, z.B. basieren auf dem Messchip ADE7932.

Um einen Missbrauch der Ladepunkte zu unterbinden sollte sichergestellt sein, dass eine Entriegelung des Gehäuses des Ladepunkts nur durch befugte Personen möglich ist. Vorzugsweise kommen hierbei die Ladepunkte ohne mechanisches Schlüsselschloss aus. Sie sind z.B. nur per elektronischer Authentifizierung über das Netzwerkkabel übertragene Schlüssel "entriegelbar". Hierzu könnte ein Servomotor zum Einsatz kommen, der mittels des übertragenen Schlüssels die mechanische Entriegelung vornimmt. Dies ermöglicht z.B. einen manipulationssicheren Betrieb und eine kostengünstige Wartung. Die Entriegelung kann hierbei das mechanische Öffnen des Ladepunkts zu Wartungszwecken betreffen. Die Spannungsversorgung kann über PoE und damit das Netzwerkkabel erfolgen. Selbst wenn also keine reguläre Stromversorgung der Ladesäule vorliegt, kann eine "manuelle" Bestromung über das Netzwerkkabel z.B. ausgehend von einer benachbarten Ladesäule gewährleisten, dass ein Öffnen des elektronischen Schlosses möglich ist.

Aufgrund des hohen Kupferpreises ist davon auszugehen, dass es zu vermehrtem Ladekabel Diebstahl kommen wird. Um dem entgegenzuwirken, könnten Ladepunkte mit Ladekabeln durch eine integrierte Alarmeinrichtung gesichert sein. Sobald jemand zu stark an der Säule des Ladepunkts wackelt oder das Ladekabel abgetrennt wird, könnte sofort ein Alarmsignal an eine Leitzentrale oder einen Betreiber der Ladepunkte gesendet werden. Zudem kann über die integrierte Kamera ein Foto oder Video aufgezeichnet werden. Ein Diebstahl- und Manipulationsschutz könnte durch Widerstandsmessung im Ladekabel und/oder linearem Beschleunigungssensor im Ladekopf möglich sein. Die Widerstandsmessung könnte zum Beispiel einen Widerstand messen, der zwischen zwei Adern des Ladekabels am dem zu ladenden Fahrzeug zugewandten Ende des Ladekabels (in der Nähe des Ladekopfes oder im Ladekopf selbst) verbaut ist. Wird das Ladekabel abgerissen oder abgetrennt, wird der zwischen den besagten Adern durch den Ladepunkt gemessene Widerstand seinen Wert verändern, was zum Auslösen eines Alarms und der Übermittlung des besagten Alarmsignals führen könnte.

Mögliche weitere Varianten für Ladepunkte umfassen: Eine integrierte Kamera, die Identifizierung eines Fahrzeugs durch Nummernschild, Fahrzeugfarbe und Fahrzeugart im Alarmfall, die Erkennung und Signalisierung eines zugeparktem Ladeplatzes, die Dokumentation von Manipulation oder Vandalismus, die Erkennung von Wetterereignissen, die Unterstützung von Authentifizierungsprozessen (2FA,3FA). Selbst ein Scan von Vertragsdokumenten ist denkbar, wobei die Vertragsdokumente eine Autorisierung des unterzeichnenden zur Durchführung eines Ladevorgangs am Ladepunkt angeben.

Der Fachmann wird verstehen, dass Aspekte der vorliegenden Erfindung als Gerät, Verfahren oder Computerprogramm oder Computerprogrammprodukt ausgeführt sein können.

Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogrammprodukts annehmen, welches durch ein computerlesbares Medium oder durch mehrere computerlesbare Medien in Form von computerausführbarem Code getragen wird. Ein Computerprogramm umfasst ebenfalls den computerausführbarem Code. "Computerausführbarem Code" kann auch als "Computerprogrammanweisungen" bezeichnet werden.

Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nicht-flüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magneto-optische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RW oder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann.

"Computer-Speicher" oder "Speicher" ist ein Beispiel für ein computerlesbares Speichermedium. Ein Computer-Speicher ist jeder Speicher, der einem Prozessor direkt zugänglich ist.

"Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vorübersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-Dienstanbieters).

Die Computerprogrammanweisungen können auf einem Prozessor oder auf mehreren Prozessoren ausgeführt werden. Im Falle mehrerer Prozessoren können diese auf mehre unterschiedliche Entitäten (z.B. Clients, Servern) verteilt sein. Jeder Prozessor könnte einen für die jeweilige Entität vorgesehenen Teil der Instruktionen ausführen. Wenn also von einem System oder Verfahren die Rede ist, das mehrere Entitäten umfasst, so verstehen sich die Computerprogrammanweisungen so, dass diese so angepasst sind, um durch einen der jeweiligen Entität zugeordneten oder zugehörigen Prozessor ausgeführt zu werden.

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungs-vorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

### Bezugszeichenliste

- 100: Fahrzeug
- 101: Ladekabel
- 102: Ladepunkt
- 104: Regelvorrichtung
- 106: Internet
- 108: Stromleitung / Stromkabel
- 110: Netzwerkkabel
- 112: Strommessvorrichtung
- 114: Gebäude
- 116: Solarpaneel
- 118: Stromverbraucher
- 120: Gebäudeanschluss
- 122: öffentliches Stromnetz
- 124: Zuleitung zum Gebäude
- 126: Server
- 200: Strommesser
- 202: Netzteil
- 204: Serielle Schnittstelle
- 206: Prozessor, Speicher
- 300: Prozessor, Speicher
- 302: Schnittstelle
- 304: Netzwerk-Schnittstelle
- 306: Luftschnittstelle
- 308: Prozessor, Speicher

## Patentansprüche

1. Verfahren zum Laden eines Elektrofahrzeugs (100) an einem Ladepunkt (102) eines Satzes von Ladepunkten (102) über einen mit Versorgungsnetzspannung versorgten Elektro-Gebäudeanschluss, wobei die Ladepunkte mit dem Elektro-Gebäudeanschluss (120) über ein Stromkabel (108) und mit einem Freigabeserver (126) über ein Netzwerkkabel (110) verbunden sind, wobei eine Strommesseinrichtung (112) permanent den aktuell am Gebäudeanschluss (120) fließenden Strom bestimmt und Informationen hierüber mittels serieller Datenübertragung als Bussignal über das Netzwerkkabel (110) an die Ladepunkte (102) sendet, wobei das Verfahren durch den Ladepunkt (102) des Satzes von Ladepunkten (102) umfasst:
- Empfang einer Ladefreigabe des Elektrofahrzeuges von dem Freigabeserver (126) über das Netzwerkkabel (110) unter Verwendung eines Internetprotokolls, wobei das Netzwerkkabel somit gleichzeitig zur Übertragung von Daten unter Verwendung des Internetprotokolls über TCP/IP und zur Übertragung des seriellen Bussignals dient,
- Als Reaktion auf den Empfang der Ladefreigabe, Durchführung eines Ladevorgangs des Elektrofahrzeugs (100), wobei der Ladevorgang eine Bereitstellung des vom Gebäudeanschluss (120) über das Stromkabel (108) transportierten Stroms an das Elektrofahrzeug als Ladestrom umfasst,
- Zumindest während dem Ladevorgang, Prüfung ob das Bussignal eine Strom-Überlast am Gebäudeanschluss (120) signalisiert, und im Falle der Signalisierung der Strom-Überlast, Stoppen des Ladevorgangs.

2. Verfahren nach Anspruch 1, wobei die Bestimmung des aktuellen Stromverbrauchs und die serielle Datenübertragung in Echtzeit erfolgen.

3. Verfahren nach Anspruch 1 oder 2, wobei das Verfahren ferner eine Bereitstellung einer Regelvorrichtung (104) umfasst, wobei die Regelvorrichtung (104) ebenfalls das Bussignal empfängt, wobei die Regelvorrichtung (104) über das Internetprotokoll oder mittels serieller Datenübertragung über das Netzwerkkabel (110) dem Ladepunkt (102) eine maximal zu verwendende Ladeleistung zuweist, wobei die Regelvorrichtung (104) die zu verwendende Ladeleistung in Abhängigkeit von dem aktuellen Stromverbrauch des Gebäudeanschlusses anhand des Bussignals bestimmt.

4. Verfahren nach Anspruch 3, wobei die Regelvorrichtung (104) die maximal zu verwendende Ladeleistung ferner bestimmt in Abhängigkeit von:
- aktuell an den Ladepunkten (102) stattfindenden Ladevorgängen und/oder
- Ladeprofilen der aufzuladenden Fahrzeuge.

5. Verfahren nach Anspruch 3 oder 4, wobei jeder der Ladepunkte als die Regelvorrichtung (104) dienen kann, wobei der als Regelvorrichtung (104) dienende Ladepunkt (102) ein Master-Ladepunkt (102) und die übrigen Ladepunkte Slave-Ladepunkte sind.

6. Verfahren nach Anspruch 5, wobei die Bestimmung, welcher der Ladepunkte der Master-Ladepunkt (102) ist, zufällig oder nach einem vordefinierten Schema erfolgt.

7. Verfahren nach einem der vorigen Ansprüche 3-6, wobei der Elektro-Gebäudeanschluss (120) ein Dreiphasen-Anschluss mit drei Außenleitern ist, wobei das Stromkabel (108) ebenfalls die drei Außenleiter aufweist und über die drei Außenleiter des Stromkabels (108) die Versorgungs-Netzspannung den Ladepunkten (102) zur Verfügung gestellt wird, wobei die Strommesseinrichtung (112) den Strom spezifisch für jeden der Außenleiter des Elektro-Gebäudeanschlusses bestimmt und die Information die jeweilige Stromstärke der Außenleiter oder Verhältnisse der Stromstärken der jeweiligen Außenleiter zueinander umfasst, wobei im Falle dessen es sich bei dem Ladevorgang um einen Einphasen-Ladevorgang handelt die Regelvorrichtung (104) über das Internetprotokoll dem Ladepunkt (102) die für den Ladevorgang zu verwendenden Außenleiter des Stromkabels (108) in Abhängigkeit von der spezifisch für jeden der Außenleiter des Elektro-Gebäudeanschlusses bestimmten Stromstärke oder den Verhältnissen der Stromstärken zuweist, wobei optional das Zuweisen der zu verwendenden Außenleiter so erfolgt, dass ein möglichst gleicher Stromfluss für alle Außenleiter des Elektro-Gebäudeanschlusses resultiert.

8. Verfahren nach einem der vorigen Ansprüche, wobei zumindest ein Teil der Ladepunkte eine Luftschnittstelle zur Drahtloskommunikation mit einem mobilen Endgerät aufweist, wobei über eine der Luftschnittstellen eine Ladeanforderung für das Elektrofahrzeug empfangen wird und daraufhin unter Verwendung des Internetprotokolls an den Freigabeserver (126) gesendet wird, wobei die Ladefreigabe als Antwort hierauf vom Freigabeserver (126) empfangen wird.

9. Verfahren nach einem der vorigen Ansprüche, wobei die Strommesseinrichtung (112) ferner eine Stromflussrichtung des aktuell am Gebäudeanschluss (120) fließenden Stroms bestimmt, wobei die Strommesseinrichtung (112) ferner Informationen über die Stromflussrichtung als das Bussignal über das Netzwerkkabel (110) sendet, wobei die Ladeleistung des Ladepunkts (102) in Abhängigkeit von der mittels des Bussignals gesendeten Stromflussrichtung geregelt wird.

10. Verfahren nach Anspruch 9, wobei in Abhängigkeit von der mittels des Bussignals gesendeten Stromflussrichtung
- der Ladepunkt (102) die Ladeleistung regelt oder
- die Regelvorrichtung (104) die maximal zu verwendende Ladeleistung bestimmt.

11. Verfahren nach einem der vorigen Ansprüche, wobei der Ladepunkt (102) eine Steuerelektronik zur Durchführung des Ladevorgangs aufweist, wobei die Energieversorgung der Steuerelektronik über das Netzwerkkabel (110) erfolgt.

12. Ladepunkt (102) zum Laden eines Elektrofahrzeugs (100) über einen mit Versorgungsnetzspannung versorgten Elektro-Gebäudeanschluss, wobei der Ladepunkt (102) mit einem Elektro-Gebäudeanschluss (120) und weiteren Ladepunkten (102) über ein Stromkabel (108) und mit einer Strommesseinrichtung (112) und einem Freigabeserver (126) über ein Netzwerkkabel (110) verbindbar ist, wobei der Ladepunkt (102) ausgebildet ist zum: - Empfang einer Ladefreigabe des Elektrofahrzeuges vom Freigabeserver (126) über das Netzwerkkabel (110) unter Verwendung eines Internetprotokolls, - Als Reaktion auf den Empfang der Ladefreigabe, Durchführung eines Ladevorgangs des Elektrofahrzeugs (100), wobei der Ladevorgang eine Bereitstellung des vom Gebäudeanschluss (120) über das Stromkabel (108) transportierten Stroms an das Elektrofahrzeug als Ladestrom umfasst, - Zumindest während dem Ladevorgang, Prüfung ob ein von der Strommesseinrichtung (112) mittels serieller Datenübertragung über das Netzwerkkabel (110) empfangenes Bussignal eine Strom-Überlast am Gebäudeanschluss (120) signalisiert, wobei das Netzwerkkabel somit gleichzeitig zur Übertragung von Daten unter Verwendung des Internetprotokolls über TCP/IP und zur Übertragung des seriellen Bussignals dient, und im Falle der Signalisierung der Strom-Überlast, Stoppen des Ladevorgangs.

13. System zum Laden eines Elektrofahrzeugs (100) an einem Ladepunkt (102) eines Satzes von Ladepunkten (102) über einen mit Versorgungsnetzspannung versorgten Elektro-Gebäudeanschluss, wobei das System die Ladepunkte und eine Stromeinrichtung (112) umfasst, wobei die Ladepunkte entsprechend Anspruch 12 ausgestaltet sind.

14. Computerprogrammprodukt mit von mehreren verteilten Prozessoren ausführbaren Instruktionen, wobei die Ausführung der Instruktionen die Prozessoren zur Durchführung des Verfahrens gemäß einem der vorigen Ansprüche 1-11 veranlasst.

## Claims

1. A method for charging an electric vehicle (100) at a charging point (102) of a set of charging points (102) via an electric building connection supplied with supply mains voltage, wherein the charging points are connected to the electric building connection (120) via a power cable (108) and to an authorisation server (126) via a network cable (110), wherein a current measuring device (112) permanently determines the current currently flowing at the building connection (120) and sends information about this by means of serial data transmission as a bus signal via the network cable (110) to the charging points (102), wherein the method comprises using the charging point (102) of the set of charging points (102):
- receiving a charging authorisation for the electric vehicle from the authorisation server (126) via the network cable (110) using an Internet protocol, wherein the network cable thus serves simultaneously for the transmission of data using the Internet protocol via TCP/IP and for the transmission of the serial bus signal,
- in response to receiving the charging authorisation, carrying out a charging process of the electric vehicle (100), wherein the charging process comprises providing the current transported from the building connection (120) via the power cable (108) to the electric vehicle as charging current,
- at least during the charging process, checking whether the bus signal indicates a current overload at the building connection (120) and, if a current overload is signalled, stopping the charging process.

2. The method according to claim 1, wherein the determination of the current power consumption and the serial data transmission take place in real time.

3. The method according to claim 1 or 2, wherein the method further comprises providing a control device (104), wherein the control device (104) also receives the bus signal, wherein the control device (104) assigns a maximum charging power to be used to the charging point (102) via the Internet protocol or by means of serial data transmission via the network cable (110), wherein the control device (104) determines the charging power to be used as a function of the current power consumption of the building connection using the bus signal.

4. The method according to claim 3, wherein the control device (104) further determines the maximum charging power to be used in dependence on:
- charging processes currently taking place at the charging points (102) and/or
- charging profiles of the vehicles to be charged.

5. The method according to claim 3 or 4, wherein each of the charging points may serve as the control device (104), wherein the charging point (102) serving as the control device (104) is a master charging point (102) and the remaining charging points are slave charging points.

6. The method according to claim 5, wherein the determination of which of the charging points is the master charging point (102) is carried out randomly or according to a predefined scheme.

7. The method according to one of preceding claims 3-6, wherein the electrical building connection (120) is a three-phase connection with three outer conductors, wherein the power cable (108) also has the three outer conductors and the supply mains voltage is made available to the charging points (102) via the three outer conductors of the power cable (108), wherein the current measuring device (112) determines the current specifically for each of the outer conductors of the electrical building connection and the information comprises the respective current intensity of the outer conductors or ratios of the current intensities of the respective outer conductors to one another, wherein, if the charging process is a single-phase charging process, the control device (104) assigns the outer conductors of the power cable (108) to be used for the charging process to the charging point (102) via the Internet protocol in dependence on the current strength determined specifically for each of the outer conductors of the electrical building connection or the ratios of the current strengths, wherein optionally the outer conductors to be used are assigned in such a way that the current flow for all outer conductors of the electrical building connection is as equal as possible.

8. The method according to any one of the preceding claims, wherein at least some of the charging points have an air interface for wireless communication with a mobile terminal, wherein a charging request for the electric vehicle is received via one of the air interfaces and is then sent to the authorisation server (126) using the Internet protocol, wherein the charging authorisation is received as a response thereto from the authorisation server (126).

9. The method according to any one of the preceding claims, wherein the current measuring device (112) further determines a current flow direction of the current currently flowing at the building connection (120), wherein the current measuring device (112) further transmits information about the current flow direction as the bus signal via the network cable (110), wherein the charging power of the charging point (102) is controlled in dependence on the current flow direction transmitted by means of the bus signal.

10. The method according to claim 9, wherein, depending on the direction of current flow transmitted by means of the bus signal
- the charging point (102) controls the charging power or
- the control device (104) determines the maximum charging power to be used.

11. The method according to any one of the preceding claims, wherein the charging point (102) has control electronics for carrying out the charging process, wherein the power supply to the control electronics is provided via the network cable (110).

12. A charging point (102) for charging an electric vehicle (100) via an electrical building connection supplied with supply mains voltage, wherein the charging point (102) is connectable to an electrical building connection (120) and further charging points (102) via a power cable (108) and to a current measuring device (112) and an authorisation server (126) via a network cable (110), wherein the charging point (102) is configured for:
- receiving a charging authorisation for the electric vehicle from the authorisation server (126) via the network cable (110) using an Internet protocol,
- in response to receiving the charging authorisation, carrying out a charging process of the electric vehicle (100), wherein the charging process comprises providing the current transported from the building connection (120) via the power cable (108) to the electric vehicle as charging current,
- at least during the charging process, checking whether a bus signal received from the current measuring device (112) by means of serial data transmission via the network cable (110) signals a current overload at the building connection (120), wherein the network cable thus serves simultaneously for the transmission of data using the Internet protocol via TCP/IP and for the transmission of the serial bus signal, and, if a current overload is signalled, stopping the charging process.

13. A system for charging an electric vehicle (100) at a charging point (102) of a set of charging points (102) via an electrical building connection supplied with supply mains voltage, wherein the system comprises the charging points and a current device (112), wherein the charging points are configured in accordance with claim 12.

14. A computer program product comprising instructions executable by a plurality of distributed processors, wherein the execution of the instructions causes the processors to perform the method according to any one of the preceding claims 1-11.

## Revendications

1. Procédé de chargement d'un véhicule électrique (100) au niveau d'un point de chargement (102) d'un ensemble de points de chargement (102) par l'intermédiaire d'une connexion électrique de bâtiment alimentée en une tension d'alimentation réseau, dans lequel les points de chargement sont connectés à la connexion électrique de bâtiment (120) par l'intermédiaire d'un câble d'alimentation (108) et à un serveur d'autorisation (126) par l'intermédiaire d'un câble réseau (110), dans lequel un dispositif de mesure de courant (112) détermine de manière permanente le courant qui circule actuellement au niveau de la connexion de bâtiment (120) et envoie des informations à ce sujet au moyen d'une transmission de données sérielle en tant que signal de bus par l'intermédiaire du câble réseau (110) aux points de chargement (102), dans lequel le procédé comprend l'utilisation du point de chargement (102) de l'ensemble de points de chargement (102) pour :
- recevoir une autorisation de chargement pour le véhicule électrique depuis le serveur d'autorisation (126) par l'intermédiaire du câble réseau (110) en utilisant un protocole Internet, dans lequel le câble réseau sert ainsi simultanément pour la transmission de données en utilisant le protocole Internet par l'intermédiaire de TCP/IP et pour la transmission du signal de bus sériel,
- en réponse à l'étape consistant à recevoir l'autorisation de chargement, mettre en œuvre un processus de chargement du véhicule électrique (100) dans lequel le processus de chargement comprend une étape consistant à fournir le courant transporté depuis la connexion de bâtiment (120) par l'intermédiaire du câble d'alimentation (108) au véhicule électrique en tant que courant de chargement,
- au moins pendant le processus de chargement, contrôler si le signal de bus indique une surcharge de courant au niveau de la connexion de bâtiment (120) et, si une surcharge de courant est signalée, arrêter le processus de chargement.

2. Procédé selon la revendication 1, dans lequel la détermination de la consommation d'énergie actuelle et la transmission de données sérielle ont lieu en temps réel.

3. Procédé selon la revendication 1 ou 2, dans lequel le procédé comprend en outre une étape consistant à fournir un dispositif de commande (104), dans lequel le dispositif de commande (104) reçoit également le signal de bus, dans lequel le dispositif de commande (104) attribue une puissance de chargement maximale à utiliser au niveau du point de chargement (102) par l'intermédiaire du protocole Internet ou au moyen d'une transmission de données sérielle par l'intermédiaire du câble réseau (110), dans lequel le dispositif de commande (104) détermine la puissance de chargement à utiliser en fonction de la consommation d'énergie actuelle de la connexion de bâtiment en utilisant le signal de bus.

4. Procédé selon la revendication 3, dans lequel le dispositif de commande (104) détermine en outre la puissance de chargement maximale à utiliser en fonction :
- des processus de chargement ayant actuellement lieu au niveau des points de chargement (102) et/ou
- des profils de chargement des véhicules à charger.

5. Procédé selon la revendication 3 ou 4, dans lequel chacun des points de chargement peut servir de dispositif de commande (104), dans lequel le point de chargement (102) servant de dispositif de commande (104) est un point de chargement maître (102) et les points de chargement restants sont des points de chargement esclaves.

6. Procédé selon la revendication 5, dans lequel la détermination duquel parmi les points de chargement est le point de chargement maître (102) est mise en œuvre de manière aléatoire ou conformément à un schéma prédéfini.

7. Procédé selon l'une des revendications 3 à 6 précédentes, dans lequel la connexion électrique de bâtiment (120) est une connexion triphasée avec trois conducteurs externes, dans lequel le câble d'alimentation (108) a également les trois conducteurs externes et la tension d'alimentation réseau est rendue disponible aux points de chargement (102) par l'intermédiaire des trois conducteurs externes du câble d'alimentation (108), dans lequel le dispositif de mesure de courant (112) détermine le courant spécifiquement pour chacun des conducteurs externes de la connexion électrique de bâtiment et les informations comprennent l'intensité de courant respective des conducteurs externes ou les rapports des intensités de courant des conducteurs externes respectifs les uns aux autres, dans lequel, si le processus de chargement est un processus de chargement monophasé, le dispositif de commande (104) attribue les conducteurs externes du câble d'alimentation (108) à utiliser pour le processus de chargement au point de chargement (102) par l'intermédiaire du protocole Internet en fonction de l'intensité du courant déterminée spécifiquement pour chacun des conducteurs externes de la connexion électrique de bâtiment ou des rapports des intensités de courant, dans le cas où éventuellement les conducteurs externes à utiliser sont attribués de telle façon que le débit de courant pour tous les conducteurs externes de la connexion électrique de bâtiment est aussi égal que possible.

8. Procédé selon l'une quelconque des revendications précédentes, dans lequel au moins certains des points de chargement ont une interface d'air pour communication sans fil avec un terminal mobile, dans lequel une requête de chargement pour le véhicule électrique est reçue par l'intermédiaire de l'une des interfaces d'air et est ensuite envoyée au serveur d'autorisation (126) en utilisant le protocole Internet, dans lequel l'autorisation de chargement est reçue en réponse à celle-ci depuis le serveur d'autorisation (126).

9. Procédé selon l'une quelconque des revendications précédentes, dans lequel le dispositif de mesure de courant (112) détermine en outre une direction de débit de courant du courant circulant actuellement au niveau de la connexion de bâtiment (120), dans lequel le dispositif de mesure de courant (112) transmet en outre des informations au sujet de la direction de débit de courant en tant que signal de bus par l'intermédiaire du câble réseau (110), dans lequel la puissance de chargement du point de chargement (102) est commandée en fonction de la direction de débit de courant transmise au moyen du signal de bus.

10. Procédé selon la revendication 9, dans lequel, en fonction de la direction du débit de courant transmise au moyen du signal de bus
- le point de chargement (102) commande la puissance de chargement ou
- le dispositif de commande (104) détermine la puissance de chargement maximale à utiliser.

11. Procédé selon l'une quelconque des revendications précédentes, dans lequel le point de chargement (102) a un système électronique de commande pour mettre en œuvre le processus de chargement, dans lequel l'alimentation électrique au système électronique de commande est fournie par l'intermédiaire du câble réseau (110).

12. Point de chargement (102) destiné au chargement d'un véhicule électrique (100) par l'intermédiaire d'une connexion électrique de bâtiment alimentée en une tension d'alimentation réseau, dans lequel le point de chargement (102) peut être connecté à une connexion électrique de bâtiment (120) et des points de chargement (102) supplémentaires par l'intermédiaire d'un câble d'alimentation (108) et à un dispositif de mesure de courant (112) et un serveur d'autorisation (126) par l'intermédiaire d'un câble réseau (110), dans lequel le point de chargement (102) est configuré pour :
- recevoir une autorisation de chargement pour le véhicule électrique depuis le serveur d'autorisation (126) par l'intermédiaire du câble réseau (110) en utilisant un protocole Internet,
- en réponse à l'étape consistant à recevoir l'autorisation de chargement, mettre en œuvre un processus de chargement du véhicule électrique (100) dans lequel le processus de chargement comprend une étape consistant à fournir le courant transporté depuis la connexion de bâtiment (120) par l'intermédiaire du câble d'alimentation (108) au véhicule électrique en tant que courant de chargement,
- au moins pendant le processus de chargement, contrôler si un signal de bus reçu depuis le dispositif de mesure de courant (112) au moyen d'une transmission de données sérielle par l'intermédiaire du câble réseau (110) signale une surcharge de courant au niveau de la connexion de bâtiment (120), dans lequel le câble réseau sert ainsi simultanément pour la transmission de données en utilisant le protocole Internet par l'intermédiaire de TCP/IP et pour la transmission du signal de bus sériel, et, si une surcharge de courant est signalée, arrêter le processus de chargement.

13. Système de chargement d'un véhicule électrique (100) au niveau d'un point de chargement (102) d'un ensemble de points de chargement (102) par l'intermédiaire d'une connexion électrique de bâtiment alimentée en une tension d'alimentation réseau, dans lequel le système comprend les points de chargement et un dispositif de courant (112), dans lequel les points de chargement sont configurés selon la revendication 12.

14. Produit de programme informatique comprenant des instructions pouvant être exécutées par une pluralité de processeurs distribués, dans lequel l'exécution des instructions amène les processeurs à réaliser le procédé selon l'une quelconque des revendications 1 à 11 précédentes.
